(19)

Europäisches Patentamt
European Patent Office
Office européen des brevets

(11) **EP 2 572 779 A1**

(12) **EUROPEAN PATENT APPLICATION**
published in accordance with Art. 153(4) EPC

(43) Date of publication:
**27.03.2013 Bulletin 2013/13**

(21) Application number: **11783361.6**

(22) Date of filing: **20.04.2011**

(51) Int Cl.:
***B01J 8/12*** (2006.01)    ***C08G 75/02*** (2006.01)

(86) International application number:
**PCT/JP2011/059718**

(87) International publication number:
**WO 2011/145424 (24.11.2011 Gazette 2011/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2010 JP 2010117606**

(71) Applicant: **Kureha Corporation**
**Chuo-ku**
**Tokyo 103-8552 (JP)**

(72) Inventors:
• **KOBAYASHI, Masanori**
**Tokyo 103-8552 (JP)**

• **KAWAMA, Hirohito**
**Tokyo 103-8552 (JP)**
• **SUZUKI, Koichi**
**Tokyo 103-8552 (JP)**
• **MATSUZAKI, Mitsuhiro**
**Tokyo 103-8552 (JP)**

(74) Representative: **HOFFMANN EITLE**
**Patent- und Rechtsanwälte**
**Arabellastrasse 4**
**81925 München (DE)**

(54) **VERTICAL COUNTERCURRENT SOLID-LIQUID CONTACT METHOD, METHOD FOR WASHING SOLID PARTICLES, METHOD FOR PRODUCING POLYARYLENE SULFIDE, AND DEVICE THEREFOR**

(57)    A longitudinal solid-liquid countercurrent contact method and apparatus are provided in which an aqueous slurry containing solid particles is supplied from an upper part and is caused to pass through a plurality of contact-processing chambers connected in a vertical direction while being caused to proceed downward, a contacting liquid is supplied from a lower part and is caused to pass through the plurality of contact-processing chambers connected in the vertical direction while being caused to proceed upward, and the aqueous slurry and the contacting liquid are caused to be continuously subjected to countercurrent contact, wherein the viscosity of a liquid phase in at least one of the contact-processing chambers is controlled, and especially the viscosity $\eta_1$ of a liquid phase in a contact-processing chamber positioned at an uppermost part is controlled to fall within a range of $0.9 \le \eta_1/\eta_0 \le 2.0$ with respect to the reference viscosity $\eta_0$ as the viscosity of a predetermined reference composition of a liquid phase at a predetermined temperature.

[Fig. 1]

**Description**

TECHNICAL FIELD

The present invention relates to a longitudinal solid-liquid countercurrent contact method and a longitudinal solid-liquid countercurrent contact apparatus for performing a countercurrent contact process between solid particles and a liquid. More specifically, the present invention relates to a longitudinal solid-liquid countercurrent contact method, a method of washing solid particles, a longitudinal solid-liquid countercurrent contact apparatus used for the methods, an apparatus of washing solid particles, and the like having excellent uniformity of a solid-liquid flow and high contact efficiency using a longitudinal solid-liquid countercurrent contact apparatus in which a plurality of contact-processing chambers is disposed.

The longitudinal solid-liquid countercurrent contact method and the longitudinal solid-liquid countercurrent contact apparatus of the present invention are capable of performing a countercurrent contact process of a flow of solid particles and a flow of a liquid in a uniform, efficient and continuous manner, and therefore, can be mainly used for a unit of operation in the chemical industry such as washing, purification, extraction, impregnation, chemical reaction, and dissolution of the solid particles. For example, the longitudinal solid-liquid countercurrent contact method and apparatus of the present invention can be used as an apparatus of manufacturing a polymer such as a poly(arylene sulfide), and a washing process for processing countercurrent contact of polymerized polymer particles and a washing liquid.

BACKGROUND ART

In a field of the chemical industry, various solid-liquid contact apparatuses are used for performing an operation such as washing, purification, extraction, impregnation, chemical reaction, and dissolution of a solid by causing the solid and a liquid to contact each other. As the solid-liquid contact apparatus, a longitudinal solid-liquid countercurrent contact apparatus has been known wherein solid particles or solid particles in a slurry and a processing liquid are continuously subjected to countercurrent contact as an upward flow and a downward flow, respectively.

Because of its high contact efficiency between solid particles and a liquid and high processing capability, the longitudinal solid-liquid countercurrent contact apparatus has an advantage of higher throughput capability than other solid-liquid contact apparatuses.

Among the longitudinal solid-liquid countercurrent contact apparatuses, a continuous multistep stirring chamber type solid-liquid countercurrent contact apparatus has been known, which has a plurality of divided chambers having a stirring blade (hereinafter, referred to as "stirring chamber").

For example, Japanese Patent Publication (JP-B) No. 54-12265 (Patent Literature 1) discloses countercurrent contact of an ingredient and a solvent using a multistep extraction apparatus that has an extraction apparatus body, a step partitioning between steps, a partitioning stirring blade, and a partitioning stirring shaft. WO 2005/33058 A1 (Patent Literature 2, corresponding to US 2007/0015935 A1 and EP 1669343 A1) discloses a method of manufacturing terephtalic acid wherein a column having a plurality of stirring blades in the vertical direction is used to perform countercurrent contact.

WO 2005/32736 A1 (Patent Literature 3, corresponding to US 2006/0254622 A1 and EP 1669140 A1) discloses a method and an apparatus of continuously washing solid particles wherein the solid particles are supplied from an upper part of an longitudinal washing tank, a high concentration zone of the solid particles is formed in the washing tank, and the solid particles are subjected to countercurrent contact with an upward flow of a washing liquid while being stirred with a plurality of stirring blades. Further, Japanese Patent Application Laid-Open (JP-A) No. 2008-513186 (Patent Literature 4, and corresponding to WO 2006/030588 A1) proposes a longitudinal solid-liquid countercurrent contact apparatus wherein a plurality of stirring chambers mutually divided by a partitioning plate that has a communication opening and connected in the vertical direction is provided, a radial ejection type stirring blade and one or more baffles fixed to an inner side of a side wall are provided in each stirring chamber, and a solid inlet and a liquid inlet are provided at an upper part and a lower part.

In the longitudinal solid-liquid countercurrent contact apparatus, a plurality of divided chambers (hereinafter, referred to as "contact-processing chamber") for performing a contact process of solid-liquid is provided, and the contact process of the solid-liquid is sufficiently performed in each contact-processing chamber while the solid particles move from an upper part to a lower part. The longitudinal solid-liquid countercurrent contact apparatus is expected to have high processing capability, and moreover, to perform highly-efficient and uniform contact with a small amount of solid-liquid contact. To enhance the contact efficiency in the longitudinal solid-liquid countercurrent contact apparatus, it is necessary to continuously and rapidly renew a contact interface between the solid particles and the liquid.

Therefore, the conventional longitudinal solid-liquid countercurrent contact apparatus includes a plurality of divided chambers continuously provided in the longitudinal direction through a communication opening, and a stirring blade is provided in each divided chamber. The contact interface between the solid particles and the liquid is continuously and rapidly renewed by stirring with the stirring blade in the stirring chamber as the contact-processing chamber, so that the contact process of the solid-liquid has been sufficiently performed, and the solid particles after the contact process are moved and settled in the next connected chamber by the action of gravity and the contact process with a new liquid that flows upward is performed. The above process is repeated.

However, the contact efficiency between the solid particles and the liquid has not been sufficient. That is, in the stirring chamber as the contact-processing chamber, the following phenomena might happen: a renewal speed of the contact interface between the solid particles and the liquid becomes ununiform, backmixing occurs wherein the solid particles after a contact process in each stirring chamber is again, instead of a new liquid, in contact with the liquid with which the contact process has been already performed, ununiformity occurs in moving time of the solid particles from one contact-processing chamber to a lower connected stirring chamber, and in some cases, the solid particles after being subjected to the contact process in the stirring chamber pass through the communication opening by accompanying the upward flow of the liquid and flow backward to an upper connected stirring chamber.

In an extreme case, the solid particles rise to an surface of an aqueous washing liquid in an uppermost part of the longitudinal solid-liquid countercurrent contact apparatus, and the solid particles flow out through a drainage pass.

If these phenomena happen, not only the contact process efficiency of the longitudinal solid-liquid countercurrent contact apparatus is decreased, but also the time of being subjected to the solid-liquid countercurrent contact per solid particle becomes different. Therefore, product uniformity of the solid particles recovered as products by being subjected to the solid-liquid countercurrent contact process is lost. That is, it is anticipated that the decrease or the fluctuation of a product yield has a direct and substantial influence on quality including particle properties such as the particle diameter or the particle diameter distribution of the manufactured solid particles, mixing stability with other ingredient or melt process stability when a formation is obtained, and thermal and mechanical properties of the formation. Therefore, an active study in relation to a cause of the problem and a solution thereto has been sought.

Therefore, conventionally, it has been attempted to settle all of the solid particles at a uniform settling rate by adjusting the type, shape, attaching angle, rotation speed and the like of a stirring blade, disposing a baffle in a stirring chamber as a contact-processing chamber in the vertical direction along an inner wall surface, adjusting the position and shape of the baffle, and adjusting the shape, area, and position of a communication opening that divides a plurality of stirring chambers connected in the vertical direction. However, sufficient effect has not been obtained and further improvement has been sought.

The inventors found out that the type or the concentration of an organic solvent in an aqueous slurry or an organic solvent used as a washing liquid relates to uniformity of a settling rate of the solid particles, the rising of the solid particles and the flowing out of the solid particles through the drainage pass described above, and carried out a study.

It is known that the settling rate of particles in a viscous liquid is inversely proportional to the viscosity of the liquid according to Stokes' equation shown in the following formula 1. As a result, it can be understood that, in the liquid having high viscosity, the settling rate of particles becomes small.

$$v_s = Dp^2 \, (\rho p - \rho f)g/18\mu \quad \dots \quad \text{(Formula 1)}$$

$v_s$: A terminal settling rate of particles
Dp: The diameter of a particle (m)
pp: The density of a solid (kg/m$^3$)
$\rho f$: The average density of a liquid (kg/m$^3$)
$\mu$: The viscosity of a liquid (mPa·s)
g: Gravitational acceleration (m/s$^2$)

In a continuous multistep stirring chamber type longitudinal solid-liquid countercurrent contact apparatus including a plurality of stirring chambers, the aqueous slurry containing an organic solvent and the solid particles is supplied from an upper part of the apparatus while a contacting liquid such as water is supplied from a lower part of the apparatus, a contact process is performed by causing a downward flow and an upward flow to be subjected to countercurrent contact, and processed solid particles are discharged from a lower part, favorably, from a bottom part. In the plurality of stirring chambers of the longitudinal solid-liquid countercurrent contact apparatus, typically, the concentration of an organic solvent in the upper stirring chamber, into which the aqueous slurry containing the solid particles is supplied, is higher than that of the lower stirring chamber. Therefore, according to the above-described Stokes' equation, the settling rate of the solid particles of the upper stirring chamber is smaller than that of the lower stirring chamber.

Especially, in the continuous multistep stirring chamber type longitudinal solid-liquid countercurrent contact apparatus, the settling rate of the solid particles gradually increases from the upper stirring chamber to the lower stirring chamber. Therefore, the processing capability of the longitudinal solid-liquid countercurrent contact apparatus heavily relies on the settling rate of the solid particles in an upper part of the apparatus. That is, it has been found out, in order to improve the processing capability and the processing efficiency of the longitudinal solid-liquid countercurrent contact apparatus, that the settling rate of the solid particles in the upper part of the apparatus should be avoided becoming lower.

During the dedicated study on the uniformity of the settling rate of the solid particles, and prevention of the rising of the solid particles and the flowing out of the solid particles through the drainage pass described above in the longitudinal solid-liquid countercurrent contact apparatus in light of the findings, the inventors focused on the fact that the solid particles are more likely to stagnate in an upper part of the longitudinal solid-liquid countercurrent contact apparatus and to be discharged outside the longitudinal solid-liquid countercurrent contact apparatus through a drainage pass when the longitudinal solid-liquid countercurrent contact apparatus is operated in the wintertime, as compared with in the summertime.

The inventors measured the change of the viscosity of an acetone-water solution when the acetone concentration and the temperature of the aqueous solution are changed using a B-type viscometer (manufactured by TOKYO KEIKI INC.) The result is shown in Table 1. As a result, it has been found out that, in the acetone-water solution, the viscosity of the aqueous solution fluctuates more than double due to the influence of the acetone concentration and the temperature of the aqueous solution. Also, it has been found out, in a range where the acetone concentration is roughly 30 mass% or less, that as the acetone concentration increases, the viscosity of the acetone-water solution increases. Note that the acetone-water solution having the acetone concentration of 0 mass% is equivalent to water.

[Table 1]

| | Temperature | Acetone concentration (mass%) | | | | |
|---|---|---|---|---|---|---|
| | | 0% | 10% | 20% | 30% | 35% |
| Viscosity of acetone-water solution (mPa·s) | 2°C | 1.70 | 2.03 | 2.42 | 2.81 | 2.78 |
| | 10°C | 1.49 | 1.74 | 1.99 | 2.24 | 2.21 |
| | 20°C | 1.21 | 1.36 | 1.58 | 1.75 | 1.73 |
| | 30°C | 0.99 | 1.15 | 1.28 | 1.38 | 1.40 |
| | 40°C | 0.89 | 0.95 | 1.06 | 1.10 | 1.15 |
| | 50°C | 0.81 | Unstable due to acetone evaporation | | | |
| | 55°C | 0.80 | Unstable due to acetone evaporation | | | |

For example, the following fact has been found out in the continuous multistep stirring chamber type longitudinal solid-liquid countercurrent contact apparatus. When the aqueous slurry of the solid particles using the acetone-water solution having the acetone concentration of 20 mass% is supplied from an upper part of the apparatus and if the temperature of the acetone-water solution is a low temperature of 10°C or less, the viscosity becomes about double or more, compared with a case where the temperature of the acetone-water solution is 40°C. Therefore, the settling rate of the solid particles in the vicinity of the upper part of the apparatus becomes about half or less. As a result, a phenomenon such that the solid particles stagnate in the upper part of the apparatus and a considerable amount of the solid particles flow out through the drainage pass may cause. Similarly, it has been found out that the settling rate of the solid particles becomes ununiform and the efficiency of the solid-liquid countercurrent contact process is changed due to the fluctuation of the viscosity of the liquid phase in the in-between stirring chamber.

The inventors have succeeded in solving the problem with a quite simple means by obtaining the findings about the relation between the liquid viscosity and the efficiency of the solid-liquid countercurrent contact process.

CITATION LIST

PATENT LITERATURE

Patent Literature 1: JP-B No. 54-12265
Patent Literature 2: WO 2005/33058 A1
Patent Literature 3: WO 2005/32736 A1
Patent Literature 4: JP-A No. 2008-513186 (through PCT route)

SUMMARY OF INVENTION

TECHNICAL PROBLEM

An object of the present invention is to provide a longitudinal solid-liquid countercurrent contact method, a method of washing solid particles, a method of manufacturing poly(arylene sulfide), a longitudinal solid-liquid countercurrent contact apparatus used therefor, an apparatus of washing solid particles, and an apparatus of manufacturing poly(arylene sulfide) that have good uniformity of a solid-liquid flow and are capable of performing an efficient countercurrent contact process without causing the rising of the solid particles and the flowing out of the solid particles through the drainage pass.

SOLUTION TO PROBLEM

The inventors of the present invention diligently studied the solution to the above-described problem. As a result, it has been found out that the problem such as the rising of the solid particles and the flowing out of the solid particles through the drainage pass can be solved and the efficiency of the solid-liquid countercurrent contact can be increased while good uniformity of the solid-liquid flow can be realized by controlling viscosity of a liquid phase in at least one of the contact-processing chambers in a longitudinal solid-liquid countercurrent contact method in which an aqueous slurry containing solid particles is supplied from an upper part and is caused to pass through a plurality of contact-processing chambers connected in a vertical direction while being caused to proceed downward, a contacting liquid is supplied from a lower part and is caused to pass through the plurality of contact-processing chambers connected in the vertical direction while being caused to proceed upward, and the aqueous slurry and the contacting liquid are caused to be continuously subjected to countercurrent contact. The inventors have found out that the efficiency and uniformity of the solid-liquid countercurrent contact can be further enhanced by especially controlling the viscosity of a liquid phase in a contact-processing chamber positioned at an uppermost part (hereinafter, may be referred to as "uppermost part liquid phase viscosity"), and by further controlling the viscosity of the liquid phase in a contact-processing chamber positioned at a lowermost part (hereinafter, may be referred to as "lowermost part liquid phase viscosity").

Thus, according to one aspect of the present invention, there is provided a longitudinal solid-liquid countercurrent contact method for supplying an aqueous slurry containing solid particles from an upper part, causing the aqueous slurry to pass through a plurality of contact-processing chambers connected in a vertical direction while causing the aqueous slurry to proceed downward, supplying a contacting liquid from a lower part, causing the contacting liquid to pass through the plurality of contact-processing chambers connected in the vertical direction while causing the contacting liquid to proceed upward, and causing the aqueous slurry and the contacting liquid to be continuously subjected to countercurrent contact, the method comprising: controlling viscosity of a liquid phase in at least one of the contact-processing chambers.

According to one aspect of the present invention, the above-described longitudinal solid-liquid countercurrent contact method is provided wherein the uppermost part liquid phase viscosity $\eta_1$ is controlled to fall within a range of $0.9 \leq \eta_1/\eta_0 \leq 2.0$ with respect to reference viscosity $\eta_0$ as viscosity of a predetermined reference composition of a liquid phase at a predetermined reference temperature, and the lowermost part liquid phase viscosity $\eta_2$ is further controlled to fall within a range of $0.9 \leq \eta_2/\eta_0 \leq 1.4$.

According to another aspect of the present invention, the above-described longitudinal solid-liquid countercurrent contact method is provided wherein the viscosity of the liquid phase is controlled by controlling one or both of a temperature of the liquid phase in the contact-processing chamber positioned at the uppermost part (hereinafter, may be referred to as "uppermost part liquid phase") and a temperature of the liquid phase in the contact-processing chamber positioned at the lowermost part (hereinafter, may be referred to as "lowermost part liquid phase").

According to another aspect of the present invention, the above-described longitudinal solid-liquid countercurrent contact method is provided wherein the viscosity of the liquid phase is controlled by controlling one or both of a temperature of the aqueous slurry containing the solid particles supplied from the upper part and a temperature of the contacting liquid supplied from the lower part

According to another aspect of the present invention, the above-described longitudinal solid-liquid countercurrent contact method is provided wherein the solid particles are poly(arylene sulfide) particles, and the above-described longitudinal solid-liquid countercurrent contact method is provided wherein the solid particles are the poly(arylene sulfide) particles, and the reference viscosity $\eta_0$ is the viscosity of water at 40°C.

According to another aspect of the present invention, the above-described longitudinal solid-liquid countercurrent contact method is provided wherein the aqueous slurry contains an organic solvent including a ketones solvent such as acetone, an alcohols solvent such as methanol and isopropyl alcohol, and an amides solvent such as N-methylpyrrolidone.

Further, according to still another aspect of the present invention, a method of washing solid particles for washing the solid particles such as poly(arylene sulfide) particles is provided by the above-described longitudinal solid-liquid countercurrent contact method, and a method of manufacturing poly(arylene sulfide) including the above-described longitudinal solid-liquid countercurrent contact method or the method of washing solid particles is provided.

Further, according to another aspect of the present invention, a longitudinal solid-liquid countercurrent contact apparatus is provided in which a plurality of contact-processing chambers connected in a vertical direction is included, and an aqueous slurry containing solid particles is supplied from an upper part and is caused to pass through the plurality of contact-processing chambers connected in the vertical direction while being caused to proceed downward, a contacting liquid is supplied from a lower part and is caused to pass through the plurality of contact-processing chambers connected in the vertical direction while being caused to proceed upward, and the aqueous slurry and the contacting liquid are caused to be continuously subjected to countercurrent contact. The apparatus includes a structure having a solid particle supply pass for supplying the aqueous slurry containing the solid particles to a contact-processing chamber positioned at an uppermost part, a drainage pass for discharging a liquid positioned upper than the solid particle supply pass, a liquid supply pass for supplying a contacting liquid with the solid particles to a contact-processing chamber positioned at a lowermost part, and a processed product pass positioned lower than the liquid supply pass for taking out a processed product after a contact process between the solid particles and the contacting liquid in the contact-processing chamber positioned at the lowermost part. The apparatus also includes a viscosity control unit configured to control viscosity of a liquid phase in at least one of the contact-processing chambers.

According to another aspect of the present invention, the above-described longitudinal solid-liquid countercurrent contact apparatus is provided wherein the uppermost part liquid phase viscosity $\eta_1$ is controlled to fall within a range of $0.9 \leq \eta_1/\eta_0 \leq 2.0$ with respect to reference viscosity $\eta_0$ as viscosity of a predetermined reference composition of a liquid phase at a predetermined reference temperature.

According to another aspect of the present invention, the above-described longitudinal solid-liquid countercurrent contact apparatus is provided wherein the lowermost part liquid phase viscosity $\eta_2$ is further controlled to fall within a range of $0.9 \leq \eta_2/\eta_0 \leq 1.4$.

According to another aspect of the present invention, the above-described longitudinal solid-liquid countercurrent contact apparatus is provided wherein the viscosity control unit includes a temperature control unit configured to control one or both of a temperature of the uppermost part liquid phase and a temperature of the lowermost part liquid phase part.

According to another aspect of the present invention, the above-described longitudinal solid-liquid countercurrent contact apparatus is provided wherein the temperature control unit controls one or both of a temperature of the aqueous slurry containing the solid particles supplied from the upper part and a temperature of the contacting liquid supplied from the lower part.

According to another aspect of the present invention, the above-described longitudinal solid-liquid countercurrent contact apparatus is provided wherein the solid particles are poly(arylene sulfide) particles, and the above-described longitudinal solid-liquid countercurrent contact apparatus is provided wherein the solid particles are the poly(arylene sulfide) particles, and the reference viscosity $\eta_0$ is the viscosity of water at 40°C.

According to another aspect of the present invention, the above-described longitudinal solid-liquid countercurrent contact apparatus is provided wherein the aqueous slurry contains an organic solvent including a ketones solvent such as acetone, an alcohols solvent such as methanol and isopropyl alcohol, and an amides solvent such as N-methylpyrrolidone.

According to another aspect of the present invention, the above-described longitudinal solid-liquid countercurrent contact apparatus is provided wherein the contacting liquid is a washing liquid.

According to another aspect of the present invention, the above-described longitudinal solid-liquid countercurrent contact apparatus includes: a body part including the contact-processing chamber; and a bottom part as the contact-processing chamber and positioned below the body part, wherein the body part includes stirring chambers as the plurality of contact-processing chambers connected in the vertical direction and mutually divided by each ring-shaped partitioning plate having a communication opening in a center, and the stirring chamber as each of the contact-processing chambers includes a stirring blade fixed to a shared rotating shaft penetrating the communication opening of each ring-shaped partitioning plate.

According to another aspect of the present invention, the above-described longitudinal solid-liquid countercurrent contact apparatus further including a top part that is the contact-processing chamber above the body part is provided.

Further, according to still another aspect of the present invention, an apparatus of manufacturing poly(arylene sulfide) and an apparatus of washing solid particles including the above-described longitudinal solid-liquid countercurrent contact apparatus are provided.

ADVANTAGEOUS EFFECTS OF INVENTION

The longitudinal solid-liquid countercurrent contact method and the longitudinal solid-liquid countercurrent contact apparatus of the present invention exhibit an effect of capability of performing countercurrent contact between a flow of solid particles and a flow of a liquid in a uniform, efficient, and continuous manner. Therefore, the longitudinal solid-liquid countercurrent contact method and the longitudinal solid-liquid countercurrent contact apparatus of the present invention can be widely used mainly for a unit of operation in the chemical industry such as washing, purification, extraction, impregnation, chemical reaction, and dissolution of solid particles. For example, the longitudinal solid-liquid countercurrent contact method and the longitudinal solid-liquid countercurrent contact apparatus of the present invention exhibit sufficient washing effect as a method and an apparatus of washing solid particles such as poly(arylene sulfide) particles and exhibit an effect of capability of being effectively used as a method and an apparatus of washing poly (arylene sulfide).

BRIEF DESCRIPTION OF DRAWINGS

Fig.1 is a schematic diagram of a specific example of a longitudinal countercurrent contact apparatus according to the present invention.
Fig.2 is a schematic diagram of another specific example of the longitudinal countercurrent contact apparatus according to the present invention.
Fig.3 is a schematic diagram of still another specific example of the longitudinal countercurrent contact apparatus according to the present invention.

DESCRIPTION OF EMBODIMENTS

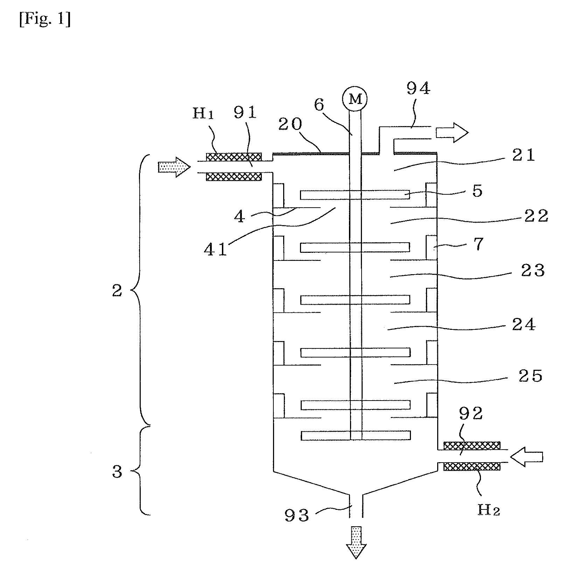

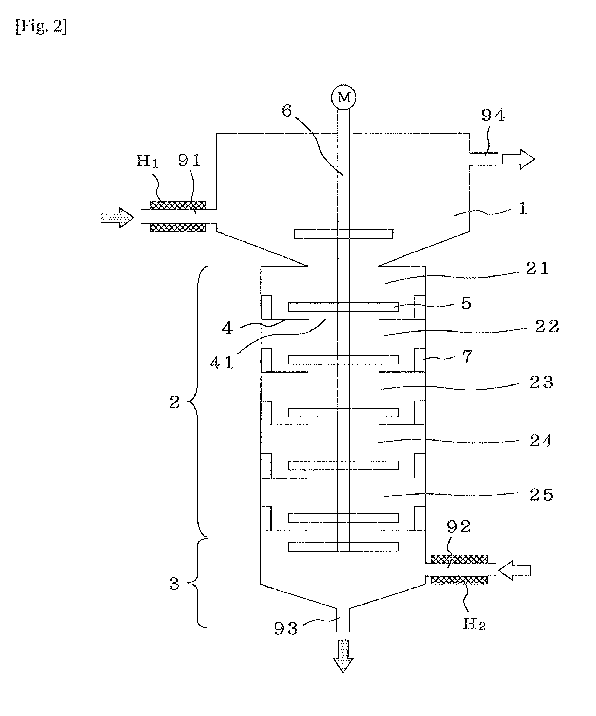

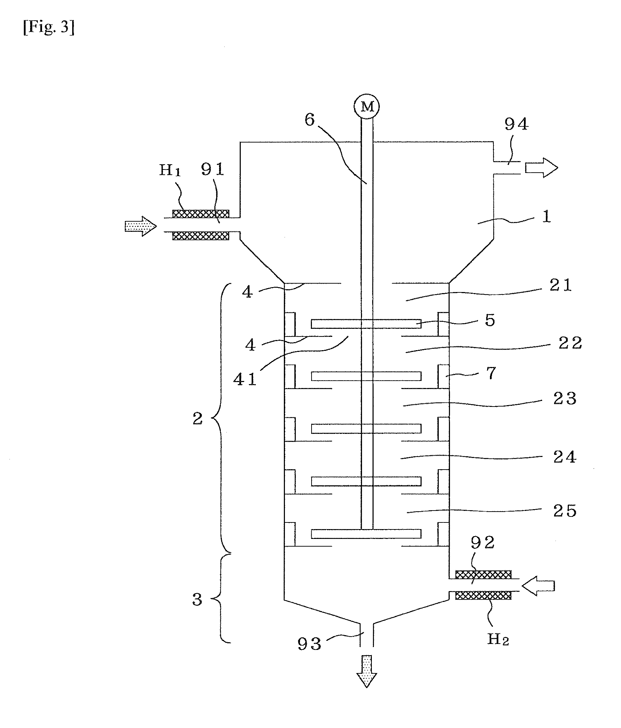

Referring to Fig. 1, a longitudinal solid-liquid countercurrent contact apparatus used for a longitudinal solid-liquid countercurrent contact method according to the present invention includes a body part 2 and a bottom part 3. Further, referring to Figs. 2 and 3 showing other specific examples, the longitudinal solid-liquid countercurrent contact apparatus according to the present invention includes a top part 1, a body part 2 and a bottom part 3.

[Body part]

To explain with reference to Fig. 1, the body part 2 connected above the bottom part 3 of the longitudinal solid-liquid countercurrent contact apparatus of the present invention includes a plurality of stirring chambers as a plurality of contact-processing chambers connected in the vertical direction.

[Stirring chamber]

In the body part 2, the stirring chambers as the plurality of contact-processing chambers are mutually divided by a ring-shaped partitioning plate 4 having a communication opening 41 in the center thereof and are connected and disposed in the vertical direction. The number of the stirring chambers can be properly selected in accordance with an inner diameter or a height of the body part 2, and is changeable within a range of 2 to 100 in accordance with the number of necessary theoretical solid-liquid contact steps. The number of the stirring chambers is favorably 3 to 50, and particularly favorably 4 to 20. In the example of Fig. 1, the stirring chambers are divided into five stirring chambers 21 to 25 for the purpose of simple description. Each stirring chamber has substantially a cylindrical shape, and a ratio H/D between a height H and an inner diameter D of the stirring chamber is typically 0.1 to 4.0, favorably 0.2 to 3.0, and particularly favorably 0.3 to 2.0. In a case where a solid-liquid density ratio, that is, (density of a solid particle)/(density of a contacting liquid) is large, it is favorable to make H/D large. On the other hand, in a case where the solid-liquid density ratio is small, H/D can be made small, whereby the overall height of the longitudinal solid-liquid countercurrent contact apparatus can be decreased.

In each of the stirring chambers 21 to 25, a stirring blade 5 is fixed to a stirring shaft 6 as a shared rotating shaft that passes through each communication opening of each ring-shaped partitioning plate 4 and at least one baffle 7 that extends in the vertical direction along an inner wall surface of the body part 2 is disposed. The composition of the solid particles and a liquid phase in each stirring chamber becomes approximately uniform by an action of the stirring blade 5 and the baffle 7, and the contact process between the solid particles and a processing liquid is performed during a predetermined staying time.

Note that the whole or a part of the body part 2 may be formed of a transparent material such as acrylic resin or the like so that the flow of the liquid or the solid particles in each of the stirring chambers 21 to 25 can be observed and confirmed from outside.

[Communication opening]

The communication opening 41 of the ring-shaped partitioning plate 4 has no limitation on shape and size as long as it enables the upper and lower stirring chambers to communicate each other. However, if the communication opening has a square portion, the solid particles can be deposited on the square portion, or a flow of the solid particles or the liquid can be disrupted. Therefore, the communication opening 41 favorably has a circular shape. A ratio of an area of the communication opening in the horizontal direction to a cross-sectional area of the stirring chamber in the horizontal direction is 1 to 40%, and favorably 4 to 35%. If the communication opening is too large, the solid particles are discharged into a directly lower stirring chamber without being subjected to sufficient solid-liquid countercurrent contact in each stirring chamber. Therefore, due to this repetition, the solid-liquid countercurrent contact in the longitudinal solid-liquid countercurrent contact apparatus becomes insufficient. On the other hand, if the communication opening is too small, the solid particles subjected to the sufficient solid-liquid countercurrent contact in each stirring chamber cannot be discharged into the directly lower stirring chamber, and a processing time becomes extremely long and the processing efficiency is lowered. Adjacent stirring chambers are connected by an opening having an area in the horizontal direction obtained by subtracting the cross-sectional area of the stirring shaft 6 in the horizontal direction from the area of the communication opening in the horizontal direction. Therefore, the area of the communication opening in the horizontal direction is selected in consideration of the cross-sectional area of the stirring shaft 6 in the horizontal direction. The shape and the area in the horizontal direction of each communication opening may be the same, or may be different. For example, the areas of the communication openings in the horizontal direction may be gradually decreased from an upper communication opening to a lower communication opening.

[Stirring blade]

Although the stirring blade 5 may employ a turbine blade or a propeller blade in addition to a paddle blade such as a flat paddle blade, a V-type paddle blade, a pfaudler blade, an inclined paddle blade, and a brumargin blade, it is favorable to employ the paddle blade in order to efficiently perform solid-liquid countercurrent contact. All of the stirring blades 5 disposed in each stirring chamber may be the paddle blade or a part of the stirring blades 5 may be the paddle blade. The paddle blade may be a single-step blade but may also be a multi-step blade. To cause the composition between the solid particles and the liquid phase in each stirring chamber to be approximately uniform and to perform a contact process between the solid particles and the processing liquid during a predetermined staying time, it is favorable to employ the flat paddle blade that substantially causes only a flow of a liquid in a radial direction. The number of vane plates of the paddle blade is typically two to six, and four vane plates are particularly favorable because of a good balance.
As for a blade diameter d of the paddle blade, (the blade diameter d of the paddle blade)/(the diameter D of the stirring chamber) is favorably in a range of 0.4 to 0.9, more favorably 0.45 to 0.85, and particularly favorably 0.47 to 0.80, so that the contact efficiency can be enhanced. If d/D is too small, the solid particles are stagnated in the vicinity of a wall of the stirring chamber, and an effective volume of the stirring chamber becomes decreased, whereby the efficiency of the solid-liquid countercurrent contact is deteriorated. In the present invention, the blade diameter of the paddle blade is represented by a total of the lengths of two paddle blades and the outer diameter of the stirring shaft.
A blade width h of the paddle blade favorably satisfies (the blade width h of the paddle blade)/(the diameter D of the stirring chamber) $\leq$ 0.20, more favorably h/D $\leq$ 0.15, and particularly favorably h/D $\leq$ 0.10. Although there is no lower limit for h/D, it is typically 0.01 or more, favorably 0.012 or more, and more favorably 0.015 or more in order to retain the strength of the paddle blade. If h/D is too large, mixture of the solid particles in the up and down direction is caused, and the frequency of going in and out of the solid particles between the stirring chambers is increased, whereby the contact process efficiency between the solid particles and the liquid is decreased.
To sufficiently perform the solid-liquid countercurrent contact in the stirring chamber, each of the stirring blades 5 disposed in each stirring chamber is disposed above the communication opening of each ring-shaped partitioning plate, and to cause the solid particles to stay in the stirring chamber for a predetermined time and to prevent unintended discharging of the solid particles, the stirring blade 5 is favorably disposed at a lower half region of the stirring chamber.

[Baffle]

The baffle 7 disposed in each stirring chamber is a planar member extending in the vertical direction along an inner wall surface of the body part. Existence of the baffle 7 can cause a flow of the liquid to be stirred up and down as well as a flow in the radial or circumferential direction. Therefore, the settlement of the solid particles is alleviated. Further, by disposing the baffle, a hindrance to the renewal of the contact interface can be prevented, which may occur due to corotation of the solid particles and the liquid in accordance with the rotation of the stirring blade 5. As the baffle 7 disposed in each stirring chamber, two to eight baffles may be disposed at equal intervals in the circumferential direction. A height in the vertical direction, a protruding height in the radial direction, and a fixing position of the baffle 7 can be determined in accordance with the height H and the inner diameter D of each stirring chamber, the shape and the size of the paddle blade, a feeding speed of a solid (slurry) and a feeding speed of the liquid, or the like. The baffle 7 disposed in each stirring chamber is favorably disposed to be biased into a lower side of each stirring chamber, that is, to be disposed at a position falling within the lower half region of each stirring chamber in order to sufficiently perform the solid-liquid countercurrent contact process.

[Rotating shaft]

The stirring shaft 6 as a rotating shaft, to which each of the paddle blades 5 is fixed, is a shared rotating shaft that passes through the communication openings 41 of the ring-shaped partitioning plates 4 as well as the top part 1 and the body part 2. As described above, the adjacent stirring chambers are connected by the opening having the area in the horizontal direction obtained by subtracting the cross-sectional area of the stirring shaft 6 in the horizontal direction from the area of the communication opening 41 in the horizontal direction. It is apparent that the diameter of the stirring shaft 6 is smaller than the communication opening. However, if the diameter of the stirring shaft 6 is too small, the strength of the stirring shaft 6 itself is lowered, and the area of the opening in the horizontal direction is increased. As a result, a short path of the solid particles may occur without being subjected to sufficient solid-liquid contact in the stirring chamber. Therefore, the diameter of the stirring shaft 6 may be a size in a range of 5 to 35% of the diameter of the communication opening, favorably 10 to 30%, and particularly favorably 12 to 25%.

The stirring blade 5 is attached and fixed to the stirring shaft 6 as the rotating shaft at a position in each stirring chamber of the body part 2. Although the stirring shaft 6 may have a length ending in the body part 2, the length favorably extends into the bottom part 3 so that the stirring efficiency of the entire longitudinal solid-liquid countercurrent contact apparatus can be enhanced. Further, in a case where a tip of the stirring shaft 6 is positioned in the bottom part 3, the stirring blade is favorably attached to the tip of the stirring shaft 6.

The stirring shaft 6 as the rotating shaft is rotationally driven by a motor provided at a cover 20 at an upper part of the stirring chamber 21 at an uppermost part of the longitudinal solid-liquid countercurrent contact apparatus, or provided above the top part 1 provided as needed. Although the number of rotations of the stirring shaft 6 can be properly determined within a range where the solid particles and the liquid can be sufficiently in contact with each other in each stirring chamber, stirring power per unit volume may be determined to be 0.1 to 35 W/m$^3$, favorably 0.3 to 20 W/m$^3$, and more favorably 0.5 to 10 W/m$^3$. As the corresponding number of rotation, a so-called low-speed rotation range of approximately 5 to 100 rpm, favorably 8 to 60 rpm, more favorably 9 to 50 rpm, and particularly favorably 10 to 40 rpm can be employed. If the number of rotations of the stirring shaft is too large, up and down movement of the solid particles is facilitated, the solid particles flow back to the upper connected stirring chamber, and uniformity of the solid-liquid countercurrent contact is deteriorated, whereby the contact efficiency is decreased. Therefore, as a result of insufficient performance of processes such as chemical reaction and washing, the processing efficiency is lowered. If the number of rotations of the stirring shaft is too small, the liquid that has contacted the solid particles maintains corotation for a long time. Accordingly, the solid particles cannot be in contact with a new liquid, whereby the processing efficiency is also lowered.

[A pass and solid-liquid countercurrent contact]

The longitudinal solid-liquid countercurrent contact apparatus of the present invention is connected to a solid particle supply pass 91 for supplying aqueous slurry containing solid particles to the stirring chamber 21 as the contact-processing chamber positioned at an uppermost part, a drainage pass 94 for discharging a liquid positioned upper than the solid particle supply pass, a liquid supply pass 92 at a bottom part for supplying a contacting liquid that contacts the solid particles, and a processed product pass 93 positioned lower than the liquid supply pass at the bottom part and for taking out a processed product after the contact process between the solid particles and the contacting liquid.

To supply the aqueous slurry containing the solid particles to the stirring chamber 21 as the contact-processing chamber positioned at the uppermost part, the solid particle supply pass is connected to the stirring chamber 21 at the uppermost part, and the aqueous slurry is directly supplied to the stirring chamber 21 at the uppermost part.

Note that, to be described below, in the longitudinal solid-liquid countercurrent contact apparatus in which a top part 1 is further provided above a body part 2 shown in Figs. 2 and 3, the solid particle supply pass is connected to the top part 1 equivalent to the contact-processing chamber positioned at the uppermost part, and the aqueous slurry containing the solid particles is supplied to the top part 1, so that the aqueous slurry is indirectly supplied to the stirring chamber 21 of the body part.

The aqueous slurry containing the solid particles supplied from the solid particle supply pass 91 connected to the longitudinal solid-liquid countercurrent contact apparatus to the stirring chamber 21 as the contact-processing chamber positioned at the uppermost part firstly moves within the stirring chamber 21 at the uppermost part by an action of a liquid flow caused by rotation of the stirring blade 5 and the baffle 7 in the stirring chamber 21 at the uppermost part.

At this time, the composition between the solid particles and the liquid phase in the stirring chamber 21 becomes approximately uniform, and a contact process between the solid particles and the contacting liquid is performed. Although the solid particles are gradually settled by the action of gravity, the solid particles stay in the stirring chamber 21 at the uppermost part for a predetermined time.

The flow of the contacting liquid introduced into the longitudinal solid-liquid countercurrent contact apparatus through the liquid supply pass 92 connected to the bottom part rises from the bottom part, successively passes through a plurality of stirring chambers provided in the body part, and contacts the flow of the aqueous slurry containing the solid particles settled in the stirring chamber 21 at the uppermost part in a countercurrent condition, whereby the solid-liquid countercurrent contact is performed. As described above, the composition between the solid particles and the liquid phase in the stirring chamber 21 is approximately uniform, and the contact process between the solid particles and the contacting liquid is performed.

Because the solid particles are gradually settled by the action of gravity, a flow rich in the solid particle passes through the communication opening from the stirring chamber 21 at the uppermost part and is introduced into a lower connected stirring chamber 22. In the stirring chamber 22, similar to the stirring chamber 21 at the uppermost part, the solid particles are subjected to a solid-liquid contact process with the contacting liquid introduced into the longitudinal solid-liquid countercurrent contact apparatus from the liquid supply pass 92 under the stirring action by the stirring blade 5 and the baffle 7 provided in the stirring chamber 22. At this time, the contact process between the solid particles and the contacting liquid is performed under the condition where the solid particles stay for a predetermined time while the composition between the solid particles and the liquid phase is approximately uniform.

Further, a similar solid-liquid contact process is repeated in the stirring chambers 23 to 25, and the solid-liquid countercurrent contact process is performed in the longitudinal solid-liquid countercurrent contact apparatus in its entirety by repeating such a solid-liquid contact process.

The aqueous slurry containing the solid particles having been subjected to the solid-liquid contact in the body part 2 is then subjected to the contact process with the contacting liquid introduced from the liquid supply pass 92 in the bottom part 3. Therefore, the bottom part 3 is equivalent to the contact-processing chamber positioned at the lowermost part. To sufficiently perform the contact process between the solid particles and the contacting liquid, the stirring blade 5 may be provided in the bottom part 3. The solid particles stay in the bottom part 3 for a predetermined time, are subjected to the contact process with the contacting liquid, and are then finally discharged from the processed product pass 93 connected lower than the liquid supply pass and for taking out a processed product after the contact process between the solid particles and the contacting liquid.

Meanwhile, while the contacting liquid introduced from the liquid supply pass 92 into the longitudinal solid-liquid countercurrent contact apparatus repeats counter contact with the aqueous slurry containing the solid particles introduced from the solid particle supply pass 91 into the longitudinal solid-liquid countercurrent contact apparatus, the contacting liquid is discharged from the drainage pass 94 for discharging a liquid and connected to an upper part of the longitudinal solid-liquid countercurrent contact apparatus than the liquid supply pass 92.

[Top part]

The longitudinal solid-liquid countercurrent contact apparatus in Fig. 2 is another specific example of the present invention and includes the top part 1 above the body part 2, and the solid particle supply pass 91 is connected to the top part 1. The drainage pass 94 for discharging a liquid is connected to the top part 1 of the longitudinal solid-liquid countercurrent contact apparatus, the connected part being higher than the solid particle supply pass 91.

The aqueous slurry containing the solid particles introduced from the solid particle supply pass 91 into the top part 1 is subjected to the contact process in the top part 1 with the contacting liquid supplied from the liquid supply pass 92. Therefore, in the longitudinal solid-liquid countercurrent contact apparatus having the top part 1 above the body part, the top part 1 is equivalent to the contact-processing chamber positioned at the uppermost part.

The top part 1 has a cross-sectional area in the horizontal direction enlarged about 1 to 4 times the body part 2 and is connected to the body part 2 via a tapered part as needed so that the aqueous slurry containing the solid particles introduced from the solid particle supply pass 91 becomes harder to be subjected to backmixing in the axial direction by the liquid flow discharged from the drainage pass 94. In the top part 1, although the stirring blade 5 may not be disposed to the stirring shaft 6, the stirring blade 5 such as a paddle blade is disposed so that the solid particles in the aqueous slurry introduced from the solid particle supply pass 91 can be subjected to a sufficient contact process in the top part 1.

The longitudinal solid-liquid countercurrent contact apparatus in Fig. 3 is further another specific example of the present invention and includes the top part 1 above the body part. The characteristic of the top part 1 compared with the longitudinal solid-liquid countercurrent contact apparatus in Fig. 2 is that the top part 1 has a structure capable of having a large angle of rest, and the stirring blade 5 is not disposed in the top part 1. The solid particles can stay in the top part 1 for a predetermined time and be subjected to the contact process under the condition where the composition of the solid particles and the liquid phase is approximately uniform by a combination of the type or the concentration of the solid particles in the slurry, the type or a feeding speed of the contacting liquid, and the like. Therefore, in the longitudinal solid-liquid countercurrent contact apparatus in Fig. 3, the top part 1 is equivalent to the contact-processing chamber positioned at the uppermost part. Note that the flow of the aqueous slurry containing the solid particles after the contact process from the top part 1 to the body part 2 is adjusted by disposing the doughnut-shaped partitioning plate 4 between the top part 1 and the body part 2.

As described above, Fig. 1 shows the longitudinal solid-liquid countercurrent contact apparatus that does not include the top part 1 according to the specific example of the present invention. The solid particle supply pass 91 is connected to the longitudinal solid-liquid countercurrent contact apparatus at the stirring chamber 21 as the contact-processing chamber positioned at the uppermost part. The stirring chamber 21 at the uppermost part includes the cover 20 at the upper part and the stirring shaft 6 penetrates the cover 20 and is provided. The drainage pass 94 positioned higher than the solid particle supply pass 91 is connected to the longitudinal solid-liquid countercurrent contact apparatus at a connection part provided at the cover 20 of the stirring chamber 21 at the uppermost part.

[Bottom part]

Although the shape of the bottom part 3 may be an approximately cylindrical shape, the bottom part 3 may have the shape where the diameter is gradually decreased in a tapered manner toward the processed product pass 93 connected to the longitudinal solid-liquid countercurrent contact apparatus so that a processed product after the contact process between the solid particles and the contacting liquid can be taken out. As described above, the bottom part 3 is equivalent to the contact-processing chamber positioned at the lowermost part. A tip of the stirring shaft 6 may protrude into the bottom part 3, or may not. When the tip of the stirring shaft 6 is positioned in the bottom part 3, the tip of the stirring shaft 6 may not be attached to the stirring blade 5, or may be attached to the stirring blade 5 as shown in Fig. 2. When the stirring blade is attached to the tip, similar solid-liquid contact to the solid-liquid contact in each stirring chamber is performed in the bottom part 3, and the countercurrent contact efficiency of the longitudinal solid-liquid countercurrent contact apparatus is further improved.

[Viscosity control unit]

The longitudinal solid-liquid countercurrent contact apparatus of the present invention includes a viscosity control unit for controlling viscosity of a liquid phase in at least one contact-processing chamber. The viscosity control unit is not particularly limited as long as the viscosity of the liquid phase in any of the top part 1 as the contact-processing chamber, the stirring chambers 21 to 25 of the body part 2, and the bottom part 3 can be controlled. The viscosity of the liquid phase in the contact-processing chamber may be controlled in such a way that the viscosity of the liquid phase in the contact-processing chamber to be controlled is controlled and changed or the viscosity of the liquid phased in other contact-processing chamber is controlled and changed. For example, the viscosity of the liquid phase in at least one of the contact-processing chambers can be controlled by adjusting the composition, temperature, flow rate of the aqueous slurry supplied from the solid particle supply pass 91 and the composition, temperature, and flow rate of the contacting liquid supplied from the liquid supply pass 92. In the simplest case, the viscosity can be controlled by providing a temperature control unit where one or both of the temperature of the uppermost part liquid phase and the temperature of the lowermost part liquid phase in consideration of the composition and flow rate of the aqueous slurry supplied from the solid particle supply pass 91 and the composition and flow rate of the contacting liquid supplied from the liquid supply pass 92.

The viscosity may be measured by disposing viscosity detection means (for example, an in-line type vibrational viscometer FVM80A-EX manufactured by SEKONIC CORPORATION) in the contact-processing chamber where the viscosity of the liquid phase is controlled, or the viscosity of the liquid phase may be measured using a B-type viscometer by properly collecting the liquid phase from the contact-processing chamber. The viscosity of the liquid may be estimated by disposing a proper specific gravity meter and thermometer and obtaining a composition of the liquid from a measured specific gravity and temperature. These viscosity detection means do not constitute the viscosity control unit of the present invention.

To increase the efficiency of the solid-liquid countercurrent contact having good uniformity of the flow of solid-liquid without raising the solid particles or flowing out the solid particles through the drainage pass 94, it is effective to control the uppermost part liquid phase viscosity $\eta_1$, and to further control the lowermost part liquid phase viscosity $\eta_2$. Therefore, the longitudinal solid-liquid countercurrent contact apparatus of the present invention specifically favorably includes a viscosity control unit that controls the uppermost part liquid phase viscosity $\eta_1$ to fall within a range of $0.9 \leq \eta_1/\eta_0 \leq 2.0$ with respect to reference viscosity $\eta_0$ that is the viscosity of a predetermined reference composition of the liquid phase under a predetermined reference temperature. More favorably, a viscosity control unit that controls the lowermost part liquid phase viscosity $\eta_2$ to fall within a range of $0.9 \leq \eta_2/\eta_0 \leq 1.4$ is included. The viscosity control unit is, for example, capable of controlling the viscosity of the liquid phase in the contact-processing chamber by adjusting the composition, temperature, and flow rate of the aqueous slurry supplied from the solid particle supply pass 91 and the composition, temperature, and flow rate of the contacting liquid supplied from the liquid supply pass 92, as described above. Hereinafter, a method and an apparatus for controlling the uppermost part liquid phase viscosity $\eta_1$ and the lowermost part liquid phase viscosity $\eta_2$ will be described.

With regard to the control of the uppermost part liquid phase viscosity $\eta_1$, the reference viscosity $\eta_0$ means, with respect to a liquid phase of the aqueous slurry supplied from the solid particle supply pass 91, the viscosity of a predetermined reference composition of the liquid phase of the aqueous slurry at a predetermined reference temperature. Our experience shows that the reference temperature is a unique temperature to the composition of the liquid phase of the aqueous slurry, under which a preferred solid-liquid countercurrent contact can be performed. The reference composition of the liquid phase means a solvent itself when the liquid phase is composed of the single solvent, whereas when the liquid phase is a mixture of solvents, the reference composition means one solvent of the component of the mixture. When the liquid phase is a mixture of an organic solvent and water, typically, a composition where the concentration of the organic solvent is 0 mass%, that is, where the organic solvent is composed of only water is employed as the reference composition.

For example, when the liquid phase of the aqueous slurry is an acetone-water solution, the reference temperature is set to be 40°C, and an acetone-water solution having the acetone concentration of 0%, that is, water may be selected as the reference composition of the liquid phase, as described below. Therefore, in this case, the reference viscosity $\eta_0$ is the viscosity of water under 40°C, that is, 0.89 mPa·s.

If $\eta_1/\eta_0$ is too small, the downward moving speed of the solid particles is too large, so that the countercurrent contact process of the solid-liquid becomes insufficient. If $\eta_1/\eta_0$ is too large, the downward movement of the solid particles becomes slow, and the solid particles stay in or in the vicinity of the contact-processing chamber positioned at the uppermost part for a long time. As a result, the solid particles discharged from the longitudinal solid-liquid countercurrent contact apparatus without being subjected to sufficient solid-liquid countercurrent contact process increase. $\eta_1/\eta_0$ is favorably in a range of $0.95 \le \eta_1/\eta_0 \le 1.8$, more favorably $1.0 \le \eta_1/\eta_0 \le 1.6$, and particularly favorably $1.0 \le \eta_1/\eta_0 \le 1.4$.

A more favorable embodiment of the present invention controls the viscosity $\eta_2$ of the liquid phase in the contact-processing chamber positioned at the lowermost part to fall within a range of $0.9 \le \eta_2/\eta_0 \le 1.4$.

With respect to the control of the lowermost part liquid phase viscosity $\eta_2$, if $\eta_2/\eta_0$ is too small, the downward moving speed of the solid particles becomes too large and the countercurrent contact process of the solid-liquid may become insufficient. If $\eta_2/\eta_0$ is too large, the solid particles stay in or in the vicinity of the contact-processing chamber positioned at the lowermost part for a long time. As a result, the contact interface between the solid particles and the contacting liquid cannot be continuously and rapidly renewed, or the composition of the solid-liquid in the contact-processing chamber may not be uniform, whereby a stable countercurrent contact process may not be performed. $\eta_2/\eta_0$ is favorably, 0.93 to 1.28, more favorably, 0.96 to 1.26, and particularly favorably, 0.99 to 1.24.

A more favorable embodiment of the present invention further controls the viscosity $\eta_2$ of the liquid phase in the contact-processing chamber positioned at the lowermost part to fall within a range of $0.85 \le \eta_2/\eta_1 \le 1.05$.

With respect to the control of the lowermost part liquid phase viscosity $\eta_2$, if $\eta_2/\eta_1$ is controlled to fall within the above-described range, the downward moving speed of the solid particles can fall within a preferred range, whereby the countercurrent contact process of the solid-liquid can be sufficiently performed as well as a gap of the temperature between the aqueous slurry and the contacting liquid is small. As a result, no large temperature gradient is caused in the contact-processing chamber and the composition of the solid-liquid in the contact-processing chamber becomes uniform, whereby a stable countercurrent contact process can be performed. $\eta_2/\eta_1$ is favorably, 0.86 to 1.04, more favorably, 0.88 to 1.02, and particularly favorably 0.90 to 1.00.

[Temperature control unit]

The temperature control unit provided as the viscosity control unit of the longitudinal solid-liquid countercurrent contact apparatus of the present invention is not particularly limited as long as it is favorably capable of controlling the temperature of the uppermost part liquid phase or the temperature of the lowermost part liquid phase. For example, the temperature control unit may be capable of controlling the temperature of a part or the whole of the longitudinal solid-liquid countercurrent contact apparatus, or may be capable of controlling one or both of the temperature of the aqueous slurry supplied from the solid particle supply pass 91 and the temperature of the contacting liquid supplied from the liquid supply pass 92, the aqueous slurry and the contacting liquid being supplied to the longitudinal solid-liquid countercurrent contact apparatus.

The temperature control unit provided in the longitudinal solid-liquid countercurrent contact apparatus of the present invention may be, more favorably, an apparatus that is capable of controlling one or both of the temperature and a feed rate of one or both of the aqueous slurry supplied from the solid particle supply pass 91 and the contacting liquid supplied from the liquid supply pass 92.

The temperature control unit provided in the longitudinal solid-liquid countercurrent contact apparatus of the present invention may be an apparatus that controls the temperature of a container such as a tank in which the aqueous slurry or the contacting liquid is stored.

[Control of an uppermost part liquid phase viscosity by means of temperature control of an aqueous slurry]

A mixture of the aqueous slurry and the contacting liquid supplied from the liquid supply pass 92 is formed in the contact-processing chamber positioned at the uppermost part by providing the temperature control unit at the solid particle supply pass 91 for supplying the aqueous slurry containing the solid particles to control the temperature, and by supplying the aqueous slurry into the contact-processing chamber positioned at the uppermost part. By controlling the temperature of the aqueous slurry, the viscosity $\eta_1$ of the liquid phase of the mixture as the uppermost part liquid phase can be controlled to fall within a range of $0.9 \leq \eta_1/\eta_0 \leq 2.0$ with respect to the reference viscosity $\eta_0$ that is the viscosity of a predetermined reference composition of the liquid phase at a predetermined reference temperature.

It is obvious that the uppermost part liquid phase viscosity $\eta_1$ is subject to influence depending on a value of the viscosity of the aqueous slurry. Because the viscosity of the aqueous slurry fluctuates in accordance with the composition and temperature of the liquid component (liquid phase component) in the aqueous slurry and the type and content of the solid particles, and the like, the temperature of the aqueous slurry is controlled so that the liquid phase of the aqueous slurry has the desired viscosity in consideration of the composition of the liquid component and a heat characteristic of the aqueous slurry, the type and content of the solid particles, the outdoor temperature, and the like.

A case will be described wherein the aqueous slurry containing the solid particles is a mixed solution of water and acetone including poly(arylene sulfide) (PAS) particles and the contacting liquid is water.

As described and shown in Table 1 above, with respect to the mixed solution of acetone and water, the viscosity is measured by changing the liquid temperature roughly at every 5°C, to be more specifically, from around 0°C, specifically, from 2°C to the reference temperature for each acetone concentration. In the present experimental example, the reference temperature is set to be 40°C that is about 15°C lower than the boiling point (56.5°C) of acetone. Note that, in the mixed solution of acetone and water, the reason why the measurement is performed only until the temperature about 15°C lower than the boiling point of acetone is that evaporation of acetone is increased and therefore the viscosity cannot be stably measured, whereby the temperature exceeding the above temperature is less likely to be employed in a solid-liquid countercurrent process. With respect to the obtained viscosity, viscosity magnification of the mixed solution under each acetone concentration and temperature is obtained where the viscosity of the mixed solution (that is, water) having the acetone concentration of 0% under the reference temperature (40°C) is 1. The result is shown in Table 2.

[Table 2]

| | Temperature | Acetone concentration (mass%) | | | | |
|---|---|---|---|---|---|---|
| | | 0% | 10% | 20% | 30% | 35% |
| Viscosity magnification of acetone-water solution | 2°C | 1.91 | 2.28 | 2.72 | 3.16 | 3.12 |
| | 10°C | 1.67 | 1.96 | 2.24 | 2.52 | 2.48 |
| | 20°C | 1.36 | 1.53 | 1.78 | 1.97 | 1.94 |
| | 30°C | 1.11 | 1.29 | 1.44 | 1.55 | 1.57 |
| | 40°C | 1.00 | 1.07 | 1.19 | 1.24 | 1.29 |
| | 50°C | 0.91 | Unstable due to acetone evaporation | | | |
| | 55°C | 0.90 | Unstable due to acetone evaporation | | | |
| Note: Magnification with respect to the reference viscosity of water at 40°C. | | | | | | |

The temperature control unit controls the temperature of the aqueous slurry in the following manner. The temperature of the mixed solution of acetone and water having a particular acetone concentration that is the liquid phase of the aqueous slurry is controlled in such a way that the viscosity $\eta_1$ of the mixed solution under the temperature falls within a range of $0.9 \leq \eta_1/\eta_0 \leq 2.0$, favorably, $0.95 \leq \eta_1/\eta_0 \leq 1.8$, more favorably, $1.0 \leq \eta_1/\eta_0 \leq 1.6$, and particularly favorably, $1.0 \leq \eta_1/\eta_0 \leq 1.4$ with respect to the reference viscosity $\eta_0$ (the viscosity magnification is 1.00) that is the viscosity of water at the reference temperature (40°C).

In the present invention, the reference temperature is changeable in accordance with the characteristic of the aqueous slurry containing the solid particles. However, the reference temperature is, typically, set to be in a range of 15 to 60°C, favorably, 20 to 55°C, and more favorably, 25 to 50°C. When the liquid phase in the aqueous slurry has the boiling point in the above-described temperature range, the upper limit of the reference temperature is favorably about 10°C lower than the boiling point, and further favorably, about 15°C lower than the boiling point. In the mixed solution of acetone and water, as described above, the upper limit is set to be 40°C. When the reference temperature is lower than 15°C or exceeds 60°C, the contact efficiency may be sometimes insufficient.

Therefore, to control the uppermost part liquid phase viscosity $\eta_1$, the liquid temperature may just be increased to a desired temperature by controlling the aqueous slurry by heating in the wintertime where the outdoor temperature is low. In the summertime where the outdoor temperature is high, the liquid temperature rises due to various causes and the vapor pressure is increased, and therefore, the viscosity of the aqueous slurry becomes unstable and the countercurrent contact such as a washing process may not sometimes be smoothly performed. Therefore, it is sometimes necessary to decrease the liquid temperature by cooling control.

For example, a case of an acetone-water solution having the acetone concentration of 30 mass% will be discussed. It can be understood that, in the column of Table 2 where the acetone concentration is 30 mass%, a range of 19 to 45°C may just be secured in order to fall within a range of $0.9 \le \eta_1/\eta_0 \le 2.0$. Similarly, the range may just be favorably, 22 to 42°C, more favorably, 28 to 41°C, and particularly favorably, 36 to 42°C.

[Control of the uppermost part liquid phase viscosity and the lowermost part liquid phase viscosity by control of the temperature of a contacting liquid]

The uppermost part liquid phase viscosity $\eta_1$ and the lowermost part liquid phase viscosity $\eta_2$ can be efficiently controlled by providing the temperature control unit at the liquid supply pass 92 for supplying the contacting liquid with the solid particles (hereinafter, simply referred to as "contacting liquid").

The uppermost part liquid phase viscosity or the lowermost part liquid phase viscosity is subject to influence depending on a value of the viscosity of the contacting liquid. Because the viscosity of the contacting liquid fluctuates in accordance with the composition of the component and temperature of the contacting liquid, the temperature is controlled so as to obtain the desired viscosity in consideration of the component composition and heat characteristic of the contacting liquid, the outdoor temperature, the viscosity of the aqueous slurry, the inflow through the solid particle supply pass 91, and the like.

In the solid-liquid countercurrent contact method and the longitudinal solid-liquid countercurrent contact apparatus of the present invention, the aqueous slurry containing the solid particles, the solid particles in the aqueous slurry, and the contacting liquid are subjected to the countercurrent contact. Therefore, to realize optimal contact efficiency, it is necessary to consider the relation between the viscosity of the aqueous slurry and the viscosity of the contacting liquid. Therefore, when the temperature control unit is used as a viscosity control device, the temperature control unit may be provided to control the temperature of the whole device. However, from the point of view of the heat exchange efficiency, it is favorable to provide the temperature control unit only at one of the solid particle supply pass 91 and the liquid supply pass 92, and is also favorably to provide the unit at both of the solid particle supply pass 91 and the liquid supply pass 92.

The temperature control unit provided at one of or both of the solid particle supply pass 91 and the liquid supply pass 92 is not particularly limited as long as the aqueous slurry containing the solid particles supplied to the longitudinal solid-liquid countercurrent contact apparatus or the contacting liquid with the solid particles is heated or cooled, so that a desired temperature can be obtained. For example, steam, warm water, or cool water may be directly supplied to the solid particle supply pass 91 or the liquid supply pass 92, and line skimming may be performed. Alternatively, a jacket can be mounted on a periphery of the solid particle supply pass 91 or the liquid supply pass 92 to provide a pass for steam, warm water, or cool water. Still alternatively, an electric heater may be disposed, or heating/cooling can be performed by a piezoelectric device. Note that the control device of the temperature is a typical controller.

Typically, it is favorable and efficient to control the temperature of the contacting liquid to be a similar temperature of the supplied aqueous slurry containing solid particles.

[Solid particles]

The solid particles contained in the aqueous slurry containing the solid particles supplied from the solid particle supply pass 91 to the longitudinal solid-liquid countercurrent contact apparatus is not particularly limited and various solid particles can be selected, which are used in any unit of operation where the solid-liquid contact is performed in the apparatus. Specific examples of the unit of operation include washing, purification, extraction, impregnation, reaction, and dissolution.

Example of a favorable use of the longitudinal solid-liquid countercurrent contact apparatus of the present invention is the use as an apparatus of washing the solid particles, and poly(arylene sulfide) (PAS) particles can be selected as the solid particles.

That is, in the apparatus of manufacturing PAS such as polyphenylene sulfide (PPS), there is the use as the apparatus of washing PAS particles for washing the PAS particles separated and recovered from the slurry containing the PAS after polymerization reaction or washing the PAS particles for subsequent purification.

For example, JP-ANo. 61-255933 (corresponding to EP 202537 A2) discloses a method of processing a polymerized slurry containing the PAS particles obtained in a polymerization process. The processing method discloses (1) a process of separating a polymerized slurry including PAS particles, byproduct crystal, dissolved alkali chloride, and arylene sulfide oligomer, and having NMP as a main liquid component into PAS particles and a slurry containing crystal alkali chloride by means of sieving, (2) a process of bringing the slurry containing crystal alkali chloride into solid-liquid separation, and obtaining crystal alkali chloride as well as recovering NMP by distilling the liquid component, (3) a process of washing the PAS particles with an organic solvent such as acetone and water, and (4) a process of distilling and recovering a solvent from the washed liquid of the organic solvent. The longitudinal solid-liquid countercurrent contact apparatus of the present invention can be favorably used in a method of washing the PAS particles in the above-described process (3). The particles can be sufficiently washed by the method of manufacturing the PAS using the longitudinal solid-liquid countercurrent contact apparatus. As a result, the PAS particles having less impurities, and uniform particle distribution can be obtained.

The longitudinal solid-liquid countercurrent contact apparatus of the present invention uses the phenomenon such that the solid particles are gradually settled by the action of gravity and successively pass through the top part 1 as the contact-processing chamber, the stirring chambers 21 to 25, and the bottom part 3. That is, a difference in density between the solid particles and the liquid that contacts the particles is used, therefore, it is necessary that there is the difference in density between the solid particles and the liquid in the stirring chamber. It is necessary to select the solid particles and the liquid in such a way that a solid-liquid density ratio, that is, (the density of the solid particles)/(the density of the liquid) falls within a range of 1.03 to 20, favorably, 1.05 to 10, and more favorably, 1.07 to 5. When the solid-liquid density ratio is less than 1.03, separation of the solid particles and the liquid results in poor outcome, whilst when the solid-liquid density ratio exceeds 20, the contact efficiency of the solid-liquid is lowered.

[An aqueous slurry containing solid particles]

The liquid component (liquid phase component) used as the aqueous slurry containing the solid particles supplied from the solid particle supply pass 91 to the longitudinal solid-liquid countercurrent contact apparatus is not particularly limited, and the liquid component used in the solid-liquid countercurrent contact apparatus is typically selected.

For example, in a case where the solid particles are the PAS particles, and the longitudinal solid-liquid countercurrent contact apparatus is an apparatus of washing the PAS particles provided in an apparatus of manufacturing the PAS, the PAS particles separated and recovered from the slurry containing the PAS after polymerization reaction are washed, or the PAS particles are washed for subsequent purification. In that case, the aqueous slurry containing an organic solvent is supplied from the solid particle supply pass 91 by using a mixed liquid of the organic solvent and water and the PAS particles. Examples of the organic solvent include a ketones solvent such as acetone, an alcohols solvent such as methanol and isopropyl alcohol, and an amides solvent such as NMP Favorable organic solvent is acetone, methanol, isopropyl alcohol, and NMP, and particularly favorable organic solvent is acetone. As the liquid component, only the organic solvent can be used, or only water can be used. When the mixed liquid of the organic solvent and water is used as the liquid component, there is no limitation of the proportion of the organic solvent. However, favorably, the proportion of 1 to 80 mass%, more favorably, 5 to 70 mass%, and particularly favorably, 10 to 60 mass% is selected. Especially, when the organic solvent is acetone, acetone of 100 mass%, that is, only acetone may be used. Alternatively, an acetone-water solution of favorably 7 to 65 mass%, more favorably, 12 to 55 mass%, and particularly favorably 15 to 50 mass% can be used. Note that examples of water used for the aqueous slurry include ultrapure water, deionized water (ion-exchanged water), and distilled water.

The content rate of the solid particles in the aqueous slurry containing the solid particles is not particularly limited as long as the solid particles can smoothly flow in the solid particle supply pass 91, can be supplied to the longitudinal solid-liquid countercurrent contact apparatus, and can be efficiently subjected to the countercurrent contact process. The content rate is, typically, 1 to 80 mass%, favorably, 3 to 50 mass%, more favorably, 5 to 40 mass%, and particularly favorably 8 to 35 mass%. In a case of the aqueous slurry containing the PAS particles, the content rate of the PAS particles is favorably, 7 to 37 mass%, more favorably, 10 to 30 mass%, and particularly favorably, 12 to 25 mass%.

[A contacting liquid with solid particles]

The contacting liquid with the solid particles supplied from the liquid supply pass 92 to the longitudinal solid-liquid countercurrent contact apparatus is not particularly limited, and a liquid component used in the solid-liquid countercurrent contact apparatus can be typically selected, and only an organic solvent or water can be used, or a mixed liquid of the organic solvent and water can be used.

When the longitudinal solid-liquid countercurrent contact apparatus is the apparatus of washing the PAS particles, the contacting liquid is used as the washing liquid, and only the organic solvent or water can be used. When the mixed liquid of the organic solvent and water is used as the liquid component, the proportion of the organic solvent is not limited. However, the proportion of favorably, 1 to 99 mass%, more favorably, 5 to 99 mass%, and particularly favorably, 10 to 98 mass% is selected. Especially, when the organic solvent is acetone, acetone of 100 mass%, that is, only acetone can be used, or an acetone-water solution having acetone of favorably, 70 to 99 mass%, more favorably, 80 to 99 mass%, and particularly favorably, 90 to 98 mass% can be used.

For example, JP-A No. 61-255933 described above discloses that NMP or alkali chloride remains in the PAS particles that are obtained by separating a polymerized slurry obtained in a polymerization process, the polymerized slurry including PAS particles, byproduct crystal, dissolved alkali chloride, and arylene sulfide oligomer, and having NMP as a main liquid component, into the PAS particles and a slurry containing crystal alkali chloride by means of sieving. These particles are washed using an acetone-water solution having only acetone or having a high content rate of acetone. In the PAS particles after the washing, acetone or alkali chloride remains, and, subsequently, it is favorable to perform washing with water.

EXAMPLE

Hereinafter, the present invention will be described more concretely with reference to Examples and Comparative Example. However, the present invention is not limited to these Examples.

[Example 1]

An aqueous slurry (PPS slurry) containing PPS particles was subjected to a washing process with ion-exchanged water using a longitudinal solid-liquid countercurrent contact apparatus having the configuration shown in Fig. 1.

The PPS slurry used in Examples and Comparative Example was prepared in such a way that the PPS particles were separated from a reaction liquid containing PPS polymers after a polymerization reaction, and the PPS particles washed with acetone and recovered were then turned into slurry again with an acetone-water solution containing acetone and water of a predetermined rate.

The longitudinal solid-liquid countercurrent contact apparatus includes a body part 2 having an inner diameter of 310 mm and formed of an acrylic resin plate and the inside of which is visible, and a bottom part 3.

The body part 2 is divided into stirring chambers 21 to 25 that are five contact-processing chambers. Each of the stirring chambers has an inner diameter D of 310 mm, and a height H of 116.3 mm (H/D = 0.375). A ring-shaped partitioning plate 4 having a communication opening 41 with the inner diameter of 140 mm was provided between the stirring chambers. Four baffles 7 having a breadth of 15.5 mm and a height of 39 mm were fixed to the ring-shaped partitioning plate 4 at four positions of an inner wall of each stirring chamber at 90° intervals so as to extend in the height direction. A stirring shaft 6 having an outer diameter of 20 mm is provided by passing through the communication opening of the ring-shaped partitioning plate of each stirring chamber, and is rotated by a motor placed on a cover 20 attached to an upper part of the stirring chamber 21 at an uppermost part.

In each stirring chamber, four flat paddle blades 5 as the stirring blades were fixed to the stirring shaft 6 at 90° intervals at a position of 25 mm upwardly away from the ring-shaped partitioning plate 4 and extending up to the height of 25mm to 40.5 mm. The flat paddle blade 5 has a stirring blade diameter (as a total of the lengths of the two stirring blades and the outer diameter of the stirring shaft) of 232.5 mm, and a blade width of 15.5 mm.

A solid particle supply pass 91 is connected to an upper part of a side surface of the stirring chamber 21 as the contact-processing chamber at an uppermost part, a temperature control unit (hot water heater) $H_1$ as a viscosity control unit being mounted on an outer peripheral surface of the solid particle supply pass 91. A drainage pass 94 is connected to the cover 20.

The stirring blade 5 having the same type as each stirring chamber is provided in the bottom part 3 as the contact-processing chamber, and a liquid supply pass 92 and a processed product pass 93 are connected, a temperature control unit (hot water heater) $H_2$ as a viscosity control unit being mounted on an outer peripheral surface of the liquid supply pass 92. The processed product pass 93 is connected to a bottommost part, and the diameter of a lower part of the bottom part 3 is gradually decreased in a tapered manner toward the processed product pass 93.

The stirring shaft 6 was rotated with the number of stirring rotation of 15 rpm using the above-described longitudinal solid-liquid countercurrent contact apparatus. Under this stirring condition, the PPS slurry with the temperature adjusted to 40°C by the temperature control unit was supplied through the solid particle supply pass 91 at a rate of 550 kg/h, and an ion-exchanged water with the temperature adjusted to 40°C by the temperature control unit was supplied through the liquid supply pass 92 at a rate of 600 kg/h. The viscosity of the liquid phase of the slurry was 1.10 mPa·s (1.24 times to the reference viscosity), and the viscosity of the ion-exchanged water was 0.89 mPa·s. A composition of the PPS slurry was the PPS particles (dry basis) of 20 mass% having an average particle diameter of 520 μm, the ion-

exchanged water of 56 mass%, and acetone of 24 mass% In the liquid phase of the aqueous slurry, acetone is 30 mass%.

By an action of the stirring blades provided in each stirring chamber and the baffles 7, the PPS slurry and the water were stirred and mixed in each stirring chamber, and the PPS particles and the water in the slurry were brought into contact with each other under an approximately uniform condition of the composition of the PPS particles and the liquid phase of the slurry in the stirring chamber. While the washing process was progressed, the PPS particles (the specific gravity of 1.35) having a larger density than the water were gently settled, and passed through the stirring chambers successively.

In the stirring chamber 21 as the contact-processing chamber at the uppermost part, the PPS slurry supplied through the solid particle supply pass 91 and the water supplied through the liquid supply pass 92 are mixed and an uppermost part liquid phase having an approximately uniform solid-liquid composition is formed. The uppermost part liquid phase was discharged as a washing drainage at a rate of 650 kg/h through the drainage pass 94. The washing drainage had the temperature of 40°C and the viscosity $\eta_1$ of 1.04 mPa·s ($\eta_1/\eta_0 = 1.17$). Because no PPS particles were seen in the washing drainage, the washing drainage was a mixed solution of acetone and water, and the acetone concentration was 17.7 mass%.

Washed slurry was discharged at a rate of 500 kg/h through the processed product pass 93. The acetone concentration (outlet acetone concentration) in the washed slurry was 3.39 mass% (the acetone concentration of the liquid phase of 390 kg in the washed slurry was 4.3 mass%). The washed slurry had the temperature of 40°C and the viscosity of the liquid phase $\eta_2$ was 0.91 mPa·s ($\eta_2/\eta_0 = 1.02$). The washing efficiency was 24% and was a satisfactory result. Note that the washing efficiency $\varepsilon$ was calculated from the following formula 2.

$$C_1 = C_0 * (1 - \varepsilon)^{(n-1)} \quad ... \quad \text{(formula 2)}$$

(where, in the formula, "$C_0$" represents the concentration of an object in the uppermost part liquid phase, "$C_1$" represents the concentration of the object in the liquid phase of the slurry at an exit of the apparatus, and "n" represents the number of the contact-processing chambers. In Examples and Comparative Example, the object is acetone, and n = 6.)

[Example 2]

The PPS slurry was subjected to a washing process with an ion-exchanged water using a longitudinal solid-liquid countercurrent contact apparatus having the same configuration as Example 1 except that a temperature control unit is not mounted on an outer peripheral surface of a liquid supply pass 92. The temperature of the ion-exchanged water supplied through the liquid supply pass 92 was 26°C that is close to the outdoor temperature of summertime.

The stirring shaft 6 was rotated with the number of stirring rotation of 15 rpm using this longitudinal solid-liquid countercurrent contact apparatus. Under this stirring condition, the PPS slurry with the temperature adjusted to 40°C by a temperature control unit was supplied through a solid particle supply pass 91 at a rate of 550 kg/h, and the ion-exchanged water was supplied through the liquid supply pass 92 at a rate of 600 kg/h. The viscosity of the liquid phase of the slurry was 1.10 mPa·s, and the viscosity of the ion-exchanged water was 1.08 mPa·s.

The washing drainage that is an uppermost part liquid phase was discharged through a drainage pass 94 at a rate of 650 kg/h, and washed slurry was discharged through a processed product pass 93 at a rate of 500 kg/h. Note that the washing drainage had the temperature of 35°C, and the viscosity $\eta_1$ was 1.13 mPa·s ($\eta_1/\eta_0 = 1.27$). No PPS particles were seen in the washing drainage, and the acetone concentration was 16.7 mass%. The washed slurry had the temperature of 30°C, and the viscosity $\eta_2$ of the liquid phase was 1.09 mPa·s ($\eta_2/\eta_0 = 1.22$). The acetone concentration (outlet acetone concentration) in the washed slurry was 4.64 mass% (the acetone concentration of the liquid phase of 390 kg in the washed slurry was 5.95 mass%), and the washing efficiency was 20% and was a satisfactory result. Therefore, in Example 2, the lowermost part liquid phase viscosity was able to be controlled without providing a temperature control unit as a viscosity control unit.

[Comparative Example]

The PPS slurry was subjected to a washing process with an ion-exchanged water using a longitudinal solid-liquid countercurrent contact apparatus having the same configuration as Example 1 except that a temperature control unit is not mounted on outer peripheral surfaces of a solid particle supply pass 91 and a liquid supply pass 92. The temperatures of the PPS slurry supplied through the solid particle supply pass 91 and of the ion-exchanged water supplied through the liquid supply pass 92 were 10°C that is close to the outdoor temperature of wintertime. The viscosity $\eta_1$ of the liquid phase of the PPS slurry was 2.24 mPa·s (the ratio of viscosity to the reference viscosity was 2.52), and the viscosity of the ion-exchanged water was 1.49 mPa·s (the ratio of viscosity to the reference viscosity was 1.67).

The stirring shaft 6 was rotated with the number of stirring rotation of 15 rpm using this longitudinal solid-liquid countercurrent contact apparatus. Under this stirring condition, the PPS slurry was supplied at a rate of 550 kg/h, and the ion-exchanged water was supplied at a rate of 600 kg/h.

The washing drainage having the temperature of 10°C was discharged through a drainage pass 94 at a rate of 650 kg/h, and washed slurry was discharged through a processed product pass 93 at a rate of 500 kg/h. The solid particles overflowed from the drainage pass 94 after one hour from a startup of an operation and aqueous slurry was discharged after two hours.

In Comparative Example, because the temperature control unit is not provided at the solid particle supply pass and the liquid supply pass, the viscosity of the acetone-water solution that is the liquid phase component in the PPS slurry is high, and the composition of the liquid phase in the stirring chamber 21 as the contact-processing chamber at the uppermost part cannot be uniform. However, when the viscosity of samples taken at five points in the stirring chamber 21 is measured, $\eta_1/\eta_0$ exceeds 2 at any of the five points. As a result, the PPS particles stay in the stirring chamber 21 at the uppermost part for a long time because the settling rate of the PPS particles is small, and the fine PPS particles accompany the upward washing water and are discharged from the longitudinal solid-liquid countercurrent contact apparatus through the drainage pass 94.

INDUSTRIAL APPLICABILITY

The longitudinal solid-liquid countercurrent contact method and the longitudinal solid-liquid countercurrent contact apparatus of the present invention exhibit an effect of capability of causing a flow of solid particles and a flow of a liquid to be subjected to a countercurrent contact process for a sufficient time in a continuous manner. Therefore, the longitudinal solid-liquid countercurrent contact apparatus and the longitudinal solid-liquid countercurrent contact method of the present invention can be widely used mainly for a unit of operation in the chemical industry such as washing, purification, extraction, impregnation, chemical reaction, and dissolution of solid particles, and can be especially used as an apparatus of washing solid particles. Especially, PAS can be efficiently manufactured by using the apparatus and the method for washing the PAS particles.

REFERENCE SIGNS LIST

| | |
|---|---|
| 1 | Top part |
| 2 | Body part |
| 21 to 25 | Stirring chamber |
| 3 | Bottom part |
| 4 | Partitioning plate |
| 41 | Communication opening |
| 5 | Stirring blade |
| 6 | Stirring shaft |
| 7 | Baffle |
| 20 | Cover |
| 91 | Solid particle supply pass |
| 92 | Liquid supply pass |
| 93 | Processed product pass |

94          Drainage pass

$H_1$ and $H_2$     Temperature control unit

**Claims**

1. A longitudinal solid-liquid countercurrent contact method for supplying an aqueous slurry containing solid particles from an upper part, causing the aqueous slurry to pass through a plurality of contact-processing chambers connected in a vertical direction while causing the aqueous slurry to proceed downward, supplying a contacting liquid from a lower part, causing the contacting liquid to pass through the plurality of contact-processing chambers connected in the vertical direction while causing the contacting liquid to proceed upward, and causing the aqueous slurry and the contacting liquid to be continuously subjected to countercurrent contact, the method comprising:

   controlling viscosity of a liquid phase in at least one of the contact-processing chambers.

2. The longitudinal solid-liquid countercurrent contact method according to claim 1, wherein viscosity $\eta_1$ of a liquid phase in a contact-processing chamber positioned at an uppermost part is controlled to fall within a range of $0.9 \leq \eta_1/\eta_0 \leq 2.0$ with respect to reference viscosity $\eta_0$ as viscosity of a predetermined reference composition of a liquid phase at a predetermined reference temperature.

3. The longitudinal solid-liquid countercurrent contact method according to claim 2, wherein viscosity $\eta_2$ of a liquid phase in a contact-processing chamber positioned at a lowermost part is controlled to fall within a range of $0.9 \leq \eta_1/\eta_0 \leq 1.4$.

4. The longitudinal solid-liquid countercurrent contact method according to claim 1, wherein the viscosity of the liquid phase is controlled by controlling one or both of a temperature of the liquid phase in the contact-processing chamber positioned at the uppermost part and a temperature of the liquid phase in the contact-processing chamber positioned at the lowermost part.

5. The longitudinal solid-liquid countercurrent contact method according to claim 4, wherein the viscosity of the liquid phase is controlled by controlling one or both of a temperature of the aqueous slurry containing the solid particles supplied from the upper part and a temperature of the contacting liquid supplied from the lower part.

6. The longitudinal solid-liquid countercurrent contact method according to any one of claims 1 to 5, wherein the solid particles are poly(arylene sulfide) particles.

7. The longitudinal solid-liquid countercurrent contact method according to any one of claims 2 to 5, wherein the solid particles are poly(arylene sulfide) particles, and the reference viscosity $\eta_0$ is the viscosity of water at 40°C.

8. The longitudinal solid-liquid countercurrent contact method according to claim 1, wherein the aqueous slurry contains an organic solvent.

9. The longitudinal solid-liquid countercurrent contact method according to claim 8, wherein the organic solvent is at least one kind selected from the group consisting of a ketones solvent, an alcohols solvent, and an amides solvent.

10. A method of washing solid particles for washing the solid particles by the longitudinal solid-liquid countercurrent contact method according to claim 1.

11. The method of washing solid particles according to claim 10, wherein the solid particles are poly(arylene sulfide) particles.

12. The method of washing solid particles according to claim 10 or 11, wherein the aqueous slurry contains an organic solvent.

13. A method of manufacturing poly(arylene sulfide) including the longitudinal solid-liquid countercurrent contact method according to claim 7.

14. The method of manufacturing poly(arylene sulfide) including the method of washing solid particles according to claim 11.

15. A longitudinal solid-liquid countercurrent contact apparatus including a plurality of contact-processing chambers connected in a vertical direction, configured to supply an aqueous slurry containing solid particles from an upper part, to cause the aqueous slurry to pass through the plurality of contact-processing chambers while causing the aqueous slurry to proceed downward, configured to supply a contacting liquid from a lower part, to cause the contacting liquid to pass through the plurality of contact-processing chambers while causing the contacting liquid to proceed upward, and configured to cause the aqueous slurry and the contacting liquid to be continuously subjected to countercurrent contact, the apparatus comprising:

a structure including;

a solid particle supply pass for supplying the aqueous slurry containing the solid particles to a contact-processing chamber positioned at an uppermost part;
a drainage pass for discharging a liquid, positioned upper than the solid particle supply pass;
a liquid supply pass for supplying a contacting liquid with the solid particles to a contact-processing chamber positioned at a lowermost part; and
a processed product pass positioned lower than the liquid supply pass for taking out a processed product after a contact process between the solid particles and the contacting liquid in the contact-processing chamber positioned at the lowermost part, and

a viscosity control unit configured to control viscosity of a liquid phase in at least one of the contact-processing chambers.

16. The longitudinal solid-liquid countercurrent contact apparatus according to claim 15, comprising:

a viscosity control unit configured to control viscosity $\eta_1$ of a liquid phase in a contact-processing chamber positioned at an uppermost part to fall within a range of $0.9 \leq \eta_1/\eta_0 \leq 2.0$ with respect to reference viscosity $\eta_0$ as viscosity of a predetermined reference composition of a liquid phase at a predetermined reference temperature.

17. The longitudinal solid-liquid countercurrent contact apparatus according to claim 16, further comprising:

a viscosity control unit configured to control viscosity $\eta_2$ of a liquid phase in a contact-processing chamber positioned at a lowermost part to fall within a range of $0.9 \leq \eta_2/\eta_0 \leq 1.4$.

18. The longitudinal solid-liquid countercurrent contact apparatus according to claim 15, wherein the viscosity control unit includes a temperature control unit configured to control one or both of a temperature of the liquid phase in the contact-processing chamber positioned at the uppermost part and a temperature of the liquid phase in the contact-processing chamber positioned at the lowermost part.

19. The longitudinal solid-liquid countercurrent contact apparatus according to claim 18, wherein the temperature control unit controls one or both of a temperature of the aqueous slurry containing the solid particles supplied from the upper part and a temperature of the contacting liquid supplied from the lower part.

20. The longitudinal solid-liquid countercurrent contact apparatus according to any one of claims 15 to 19, wherein the solid particles are poly(arylene sulfide) particles.

21. The longitudinal solid-liquid countercurrent contact apparatus according to any one of claims 16 to 19, wherein the solid particles are poly(arylene sulfide) particles, and the reference viscosity $\eta_0$ is the viscosity of water at 40°C.

22. The longitudinal solid-liquid countercurrent contact apparatus according to claim 15, wherein the aqueous slurry contains an organic solvent.

23. The longitudinal solid-liquid countercurrent contact apparatus according to claim 15, wherein the contacting liquid is a washing liquid.

**24.** The longitudinal solid-liquid countercurrent contact apparatus according to claim 15, comprising:

a body part including the contact-processing chamber; and
a bottom part as the contact-processing chamber and positioned below the body part,
wherein the body part includes stirring chambers as the plurality of contact-processing chambers connected in the vertical direction and mutually divided by each ring-shaped partitioning plate having a communication opening in a center, and
the stirring chamber as each of the contact-processing chambers includes a stirring blade fixed to a shared rotating shaft penetrating the communication opening of each ring-shaped partitioning plate.

**25.** The longitudinal solid-liquid countercurrent contact apparatus according to claim 24, further comprising:

a top part as the contact-processing chamber above the body part.

**26.** An apparatus of manufacturing poly(arylene sulfide) including the longitudinal solid-liquid countercurrent contact apparatus according to any one of claims 15, 24, and 25.

**27.** An apparatus of washing solid particles including the longitudinal solid-liquid countercurrent contact apparatus according to any one of claims 15, 24, and 25.

[Fig. 1]

[Fig. 2]

[Fig. 3]

## INTERNATIONAL SEARCH REPORT

| International application No. |
| --- |
| PCT/JP2011/059718 |

| A. CLASSIFICATION OF SUBJECT MATTER |
| --- |
| *B01J8/12*(2006.01)i, *C08G75/02*(2006.01)i |

According to International Patent Classification (IPC) or to both national classification and IPC

| B. FIELDS SEARCHED |
| --- |
| Minimum documentation searched (classification system followed by classification symbols) |
| B01J8/00, C08G75/00 |

| Documentation searched other than minimum documentation to the extent that such documents are included in the fields searched |
| --- |
| Jitsuyo Shinan Koho          1922-1996   Jitsuyo Shinan Toroku Koho   1996-2011<br>Kokai Jitsuyo Shinan Koho   1971-2011   Toroku Jitsuyo Shinan Koho   1994-2011 |

| Electronic data base consulted during the international search (name of data base and, where practicable, search terms used) |
| --- |

### C. DOCUMENTS CONSIDERED TO BE RELEVANT

| Category* | Citation of document, with indication, where appropriate, of the relevant passages | Relevant to claim No. |
| --- | --- | --- |
| X<br><br>A | JP 2008-513186 A  (Kureha Corp.),<br>01 May 2008 (01.05.2008),<br>entire text; all drawings<br>& US 2008/0025143 A1    & EP 1807186 A1<br>& WO 2006/030588 A1    & KR 10-2007-0052308 A<br>& CN 101018601 A | 1,6,8-15,20,<br>22-27<br>2-5,7,16-19,<br>21 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22 July, 2011 (22.07.11) | 02 August, 2011 (02.08.11) |

| Name and mailing address of the ISA/<br>   Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2011/059718

<A>

In the inventions in claims 1-10, 12 and 15-27, solid particles or the purpose of the treatment are not specified.

As a specific example of the inventions in claims 1-27, however, the description discloses nothing but a case wherein, in the process of producing polyarylene sulfide particles, an aqueous slurry containing said polyarylene sulfide particles is washed.

Considering that the technical meaning (for example, the effect on solid-liquid contact) of the viscosity of a liquid phase in solid-liquid contact largely varies depending on a material to be treated and the purpose of the treatment, the aforesaid specific example can be hardly interpreted in such a broad sense as to cover the whole scope of the inventions in claims 1-10, 12 and 15-27.

Thus, claims 1-10, 12 and 15-27 are not supported in the meaning within PCT Article 6.

Such being the case, the search was made exclusively on the specific example as described above.

<B>

Although "a method - - - as claimed in any of claims 2 to 5 wherein the standard viscosity $\eta_0$ is the viscosity of water at 40°C" appears in claim 7, no statement about "standard viscosity" is given in claims 4 and 5. Therefore, it is considered that the above statement in claim 7 is a clerical error for "a method - - - as claimed in claim 2 or 3 wherein the standard viscosity $\eta_0$ is the viscosity of water at 40°C".

In the present search, therefore, it is assumed that claim 7 depends on claim 2 or 3.

For the same reason, it is also assumed in the present search that claim 21 depends on claim 16 or 17.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 54012265 B
- WO 200533058 A1
- US 20070015935 A1
- EP 1669343 A1
- WO 200532736 A1
- US 20060254622 A1
- EP 1669140 A1
- JP 2008513186 A
- WO 2006030588 A1
- JP 61255933 A
- EP 202537 A2